# EUROPEAN PATENT APPLICATION

(11) **EP 1 765 028 A1**
(43) Date of publication of application: **21.03.2007**
(21) Application number: 05019992.6
(22) Date of filing: 14.09.2005
(51) Int. Cl.: H04Q 7/38, H04L 29/06

(54) **Method and system for controlling an access to a transmission**

(71) Applicant: SIEMENS AKTIENGESELLSCHAFT, 80333 München (DE)
(72) Inventor: Martelli, Frédéric, 22300 Lannion (FR)

(57) **Abstract**

The invention consists of a system and method for controlling an access of at least one user (10) to a transmission, transmitted by a transmission initiator (320) having transmission means (321) arranged to transmit, in a communications system (1000) comprising:
- defining means (432) adapted to define a type of user permitted to receive said transmission by including in a user type entry a field comprising information indicating that said at least one users (10) can only receive said transmission;
- authenticating means (422) adapted, during a joining phase, to authenticate that each one of said at least one users (10) joining said transmission is permitted to receive said transmission;
- permitting means (312) adapted upon completion of said authentication, to permit said at least one users (10) having been authenticated to receive said transmission.

## Description

### Field of the invention

The invention is used in communications systems where controlling the access to transmissions is required in order to bar unauthorised users from receiving transmissions.

### Summary of the invention

In today's communications systems, it is possible for numerous users having different types of networking equipment to transmit data to each other. In certain cases, one user can transmit data that can be received by more than one receiver. This can take place, for example, when a radio or television station transmits its program and an audience can tune in to the frequency and listen to or watch a program. This is the same as well in communications systems, where providers provide services to subscribers such as the possibility to access the internet from a mobile phone or a laptop etc. Similarly, a user can also provide, via the provider's infrastructure services to other users. This is of particular interest in mobile communications systems where mobile users wish to have access to a variety of services, for example access to the internet, to a multimedia broadcast, to email etc.

An important aspect of the availability of providing different services to users is that of charging the users that access services. The fees generated from the charging allow providers to maintain financial solvency. It is therefore of paramount importance to avoid loosing income for services provided.

Numerous ways have been implemented in order to maintain track and control the access of users to services being provided within communications systems. For television programs providers have implemented pay per view packages where a user can subscribe on a yearly, monthly or even on individual program basis with a program provider. Sometimes a user can subscribe to a basic package, which might include basic services such as news reports etc and then further subscribe to other services such as sports.

The same applies to internet providers whereby users that wish to access internet sites in order to download data files or listen to internet music broadcasts have to subscribe any pay a subscription fee, in order to have access to these services.

Similarly, the same is applicable in mobile communications systems where the users that subscribe can have access to different services.

A service provider can verify whether a subscription has been paid, and thus permit a valid subscriber to receive the service subscribed to and generate income.

However, this is not easy to perform in a communications system, whereby numerous users, stationary or mobile, requiring different services at different times with equipment of varying capabilities as well as numerous users wishing to provide different services co-exist. In such an environment, it is not possible to maintain a high degree of control over the number of users accessing a service or services being transmitted in the system. A huge investment in complicated infrastructure both hardware and software is necessary in order to guarantee that charging users can be effectuated in a correct manner so that income is not lost.

The presence of different users, being mobile or stationary, having different types of equipment and having requiring different services can cause problems with the speed of controlling the access of users to services that are available in the system. This in turn slows down the authentication of the users and in such cases users that are valid users have to wait before being allowed to receive the service.

A need therefore exists for a solution that can provide an accelerated way of controlling and authenticating users with varying service requirements and varying types of equipment, without resorting to a high cost system infrastructure.

It is an object of the invention to provide a method for quickly and efficiently controlling the access and authentication of users permitted to receive such transmissions, without the need to invest in complicated and expensive equipment. A further object of the invention is to provide a system that executes the above method thereof.

The present invention provides a method for controlling an access of at least one user to a transmission, transmitted by a transmission initiator in a communications system comprising the steps of:
- defining a type of user permitted to receive said transmission by including in a user type entry, a field comprising information indicating that said at least one user can only receive said transmission;
- authenticating, during a joining phase, that each one of said at least one user joining said transmission is permitted to only receive said transmission;
- permitting, upon completion of said authentication, said at least one user having been authenticated to receive said transmission.

The present invention provides a system with means arranged for controlling an access of at least one user to a transmission, transmitted by a transmission initiator having transmission means arranged to transmit, in a communications system comprising:
- defining means adapted to define a type of user permitted to receive said transmission by including in a user type entry a field comprising information indicating that said at least one users can only receive said transmission;
- authenticating means adapted, during a joining phase, to authenticate that each one of said at least one users joining said transmission is permitted to receive said transmission;
- permitting means adapted upon completion of said authentication, to permit said at least one users having been authenticated to receive said transmission.

The advantages of the above are that they allow users wanting to receive a transmission to be authenticated in an efficient, quick and simple manner without having to resort to complicated and expensive equipment to perform the same action. Consequently, users with varying network infrastructures can easily connect to the system and receive services being transmitted. The authentication is performed faster than in current methods, as all the information relating to the user is located in one entry, stored in one database within the service provider segment 300, thus avoiding the loss of time in having to query different distributed databases located within or without the service provider segment 300.

Additionally, the management of such a communications system is simplified, allowing for charging data to be collected in a correct and timely manner.

Further advantages can be seen in the dependent claims, wherein said user type is defined through the addition of a field comprising information indicating that the user can only receive the transmission, the user type definition is added in a user type entry that is located in an access list containing a list of users that are registered with the service provider and is stored in a database located in the communications system, thus simplifying the management of any requests for information relating to a user and the subsequent retrieval of the information.

Additionally, users are made aware of the availability of transmissions by the received message, thus avoiding having to send requests to the service provider enquiring about the available transmissions.

### Short description of the drawings

The present invention may be understood more readily, and various other aspects and features of the invention may become more apparent from the consideration of the following description, exemplary embodiments and accompanying figures which are given by way of illustration only, and thus are not limitative of the present invention, and wherein:
Fig. 1 shows a typical communications system wherein the invention is applicable.
Fig. 2 shows a detailed view of the functional entities that together implement the invention.
Fig. 3 is a flow chart displaying the steps performed by the invention.

### Detailed description of the invention

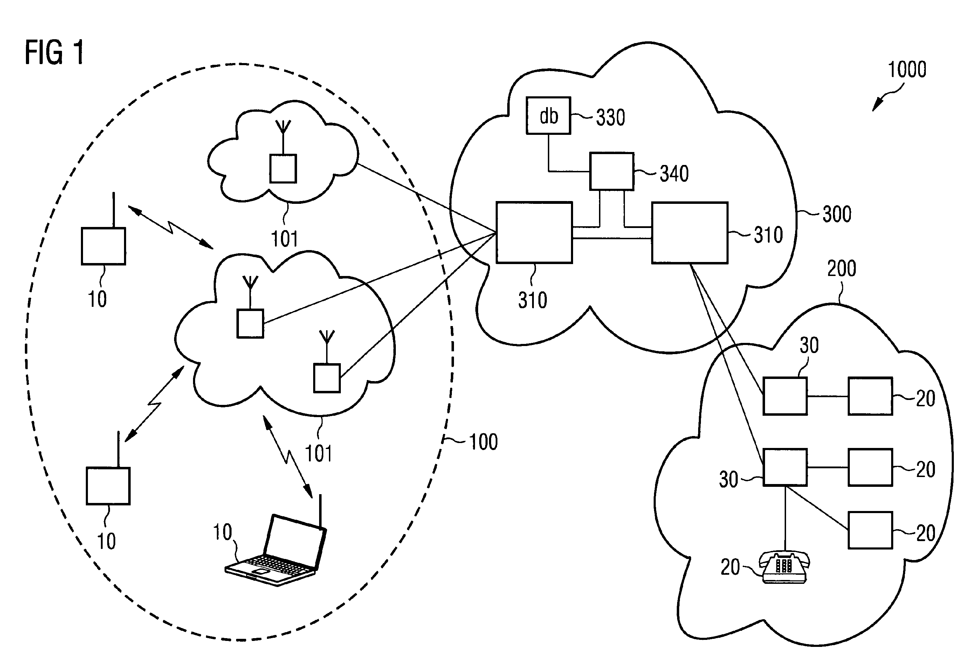

In fig. 1, a typical communications system 1000 is shown. It comprises of a mobile segment 100, a fixed line segment 200 and of a service provider segment 300.

Segment 100, comprises in turn of an Air Interface Access Network 101, and numerous mobile users 10. Mobile users 10 can use equipment such as mobile phones, portable laptops, palm pilots etc. The Air Interface Access Network 101, corresponds to the BSS (Base Station Subsystem) in GSM (Global System for Mobile Communication) or to the RAN (Radio Access Network) in UMTS (Universal Mobile Telecommunications System) and provide for the connection over the radio interface between the mobile users 10 and service provider segment 300.

Segment 200, comprises in turn of numerous stationary users 20. Stationary users 20 can use equipment such as fixed line digital phones, personal computers, television sets etc. Connectivity to the service provider segment 300 is provided through networking devices 30, such as routers, switches, hubs etc.

Segment 300, comprises the infrastructure that makes up the providers system, such as servers 310, management units 340, storage units (databases) 330.

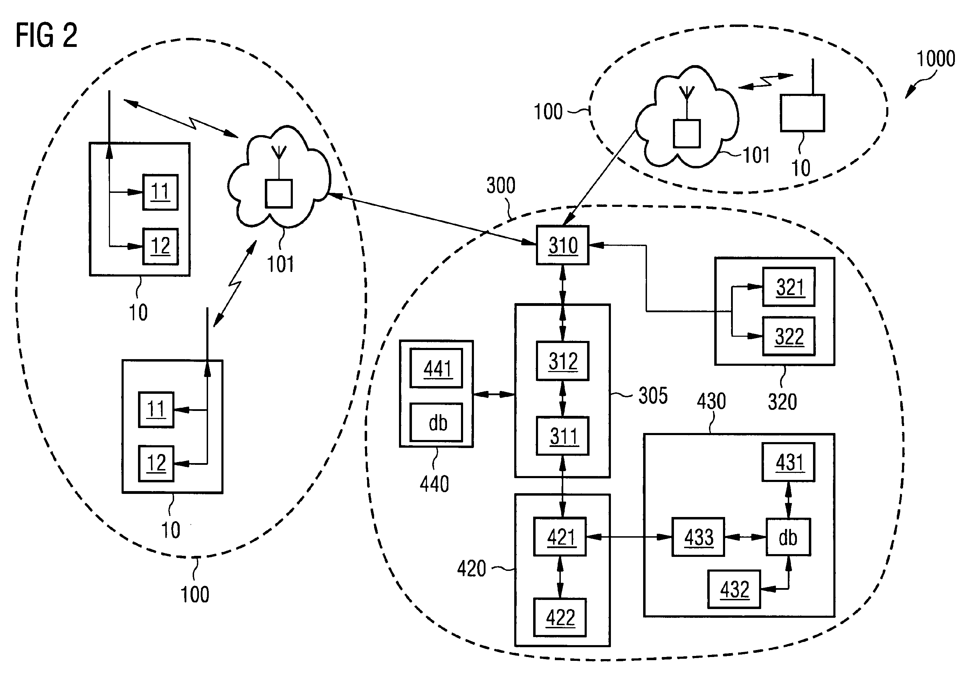

Fig. 2, shows a more detailed picture of the interaction between segments 100 and 300, wherein a mobile user 10 connects to a server 310 that provides a service or services to subscribers. In the context of the invention, a service is a data application that is provided to a subscriber by the provider and allow for the transfer of information to be effected. Email, voice connectivity, internet applications, multimedia applications are all types of services that can be provided to subscribers, which in turn are charged for using them.

A mobile user 10 running a client application on the user equipment wishes to connect and receive a service that is available and transmitted from server 310. The service is transmitted by a transmission initiator 320, which can be the service provider or another user having the ability to connect to server 310 within the service provider segment 300. Mobile user 10 accesses the segment 300 via the Air Interface Access Network 101. The access control and the authentication are performed in segment 300.

Additionally, an IMS (Internet Protocol Multimedia Subsystem) is located in segment 300 and value added services are also provided to the subscribers such as PTT (Push to Talk) and/or PTV (Push to View).

IMS is a standard defined architecture (3GPP Technical Specification 23.228 v 5.9.0) for offering Voice over IP (VoIP) and multimedia services to users. It supports multiple access types including GSM, UMTS, Wireline broadband access and WLAN (Wireless Local Area Network).

For users, IMS based services enable person-to-person and person-to-content communications in a variety of modes including voice, text, pictures and video, or any combination of these in a highly personalized and controlled way.

PTT is a method of conversing on half-duplex communication lines, including two-way radio, by pushing a button in order to send, allowing voice communication to be transmitted from you, and releasing to let voice communication be received. (PTT: Push-to-Talk over Cellular (PoC); PoC Release 1.0; Architecture V1.1.0 (2003-08); Technical Specification; Ericsson, Motorola, Siemens, Nokia).

PTV is a method that has evolved from PTT that allows users to share live video in real time from mobile phones.

Additionally, fig. 2 shows a user 10 who registers with a service provider in order to receive IMS based services. The transmitted services received by the user 10, can be received at a mobile phone, a computer, a television set, a fixed line phone, depending on the type of receiving device that user 10 is using.

This registration will take place at an S-CSCF (Serving - Call Session Control Function) 305. The S-CSCF 305 provides the user 10 with the requested service or services (even though these services may be on separate application platforms). It performs routing and translation, provides billing information to mediation systems, maintains session timers, and interrogates the HSS (Home Subscriber Server) 420 to retrieve authorization, service triggering information and user profile.

The HSS 420 is a database containing all subscriber and service data. Parameters include user identity, allocated S-CSCF name, roaming profile, authentication parameters and service information. The HSS 420 also provides the traditional Home Location Register (HLR) and Authentication Centre (AUC) functions. The HSS 420 in turn communicates with the GMLS (Group List Management Server) 430, which stores in a database, using storing means 431, access lists containing information about the different users. The GMLS 430, has also means 433 arranged to allow it to modify, retrieve, delete, and add information in the access lists. The information is stored in the form of entries within a database. The information stored in the GMLS 430 contains information that is used to authenticate the user and is retrieved by the HSS 420 through retrieving means 421 and then passed to the S-CSCF 305 which in turn allows a user 10 to receive a service being transmitted by a transmission initiator 320. Part of this information also contains details as to what user 10 is permitted to do once authorisation has been completed and access to the service enabled.

The S-CSCF 305 is coupled to a Presence Server 440. The Presence Server 440 stores in a database using storing means 441 subscription information of users that have subscribed for different services. Communications between the user 10 and these units are performed using the SIP (Session Initiation Protocol) as defined in RFC 3261 or HTTP (Hypertext Transfer Protocol) protocols as defined in RFC 2616.

Once the authentication is completed, the user 10 can begin receiving the transmitted service. In the exemplary embodiment the user 10 receives a PTT service which is transmitted as a broadcast transmission from the server 310. However, a person skilled in the art would envisage other services that could be broadcast and received by users.

In order to receive the service, user 10 has the appropriate receive 11 and transmit 12 means enabling a transmission to be received and a request to receive the transmission to be sent to the transmission initiator 320. The user 10 is made aware of the possibility of a transmission of a service by means of a message indicating that such a service is to be initiated, being broadcast by the transmission initiator 320, having the appropriate transmitting 321 and receiving means 322, at a point in time prior to the actual transmission. In the exemplary embodiment the transmission containing the service is a broadcast transmission, and those users 10 that wish to receive can receive it, by transmitting a request to the transmission initiator 320. Alternatively, the transmission initiator 320 can transmit the message individually to each register user that is active at that time instance. Additionally, in order to ensure that the largest number of users is made aware of the available service, the message can be transmitted, either by means of a broadcast or by means of individual messages, at regular times intervals prior to the commencement of the transmission.

Within the GMLS 430, entries regarding users 10 are stored by storing means 431 in access lists in a database in the GMLS 430. These entries contain information relating to the type of user that each user 10 is. By including (adding) fields in these entries through the use of defining means, the type of user can be additionally modified so that upon a request by a user to join a transmitted service and receive it, the authentication of the user 10 is performed faster than in current methods, as all the information relating to the user is located in one entry, in one location within the service provider segment 300. The defining means 432 are arranged to define the user types and to input the information into the necessary fields within the access lists. The service provider defines the type of information or parameter that is used in order to define each particular type of user. For example special characters or specific descriptions, such as (* or "False") can be used in order to define the type of user. It is obvious that a skilled person in the art could also use other characters or descriptions in order to define a type of user. The process of defining the additionally user types can be made either at the time of the user subscribing to the service provider or at any time after the initial subscription is made, when a user 10 wishes to have a type of user defined.

One such field, defined by the defining means 432, contains information or parameters indicating that a user is permitted to only receive the transmitted service once having joined with no possibility of interrupting or modifying in any way the transmitted service. Such a user can not input any audio, image or video data into the transmitted service which is also received by other users 10. This allows for control of the transmission to be maintained by the initiator 320. In PTT for example, once a user has stopped providing data input into the transmission, the data input being in the form of audio, image or video data, any other user can also then start inputting audio data. This can lead to any user transmitting anything, without any means existing for controlling the users.

Additionally, the defining means 432 are further adapted to include a further field, which is a CDR (Charging Data Record) indicating that a user 10 is registered, allowing charging data for a surcharge call to be collected by the service provider when the user 10 registers to receive a service that is not provided with a basic subscription. The CDR is a part of the user type entry and contains information relating to the type of charging data that is applicable to a user (10) registered with the service provider.

Furthermore the same defining means 432 are further adapted to include a further field indicating that a user wishing to be a transmission initiator 320 is authorised to initiate connections for transmitting a service or a broadcast transmission to users 10 which allow surcharge call data to be collected i.e. that have the CDR field in their user type entry.

Upon the receiving means 11 of user 10, receiving a message from a transmission initiator 320 having the necessary transmission means to transmit the message, that a transmission of a service is to be initiated, and user 10 wanting to receive the transmission will transmit a join message via transmission means to the S-CSCF 305. The S-CSCF 305 has communications means 311 to interact with the HSS 420 and requests authentication of the user 10. The HSS 420 in turn has communications means 421 to interact with both the S-CSCF 305 and the GMLS 430, and queries the GMLS 430 regarding user 10. GMLS 430 has retrieving means 433 that retrieve the corresponding user entry from the access lists in the stored database, and then hands the results over to the HSS 420 for authentication by authentication means 422. Therefore, all the required information regarding the user 10 is provided once in a compact manner, so that the authentication can be completed simply, quickly and efficiently, as the HSS 420 has all the information at its disposal.

Thus the time taken for authenticating the user 10 is reduced as well as the time the user has to wait before gaining access to the service. Additionally, by reducing the time taken to authenticate a user, charging data can be collected faster.

Upon completion of the authentication, the HSS 420 notifies the S-CSCF 305 of the result and the user 10 is given access to the transmission or denied access in the event of a failed authentication, by permitting means 312. In the event of a rejection, the service provider can transmit a message to the user 10, enabling the user 10 to modify the user type entries of the subscription during the current connection. The user 10 has the option to modify the entries at that time instance or to refuse and modify the entries at a later time instance and a different connection.

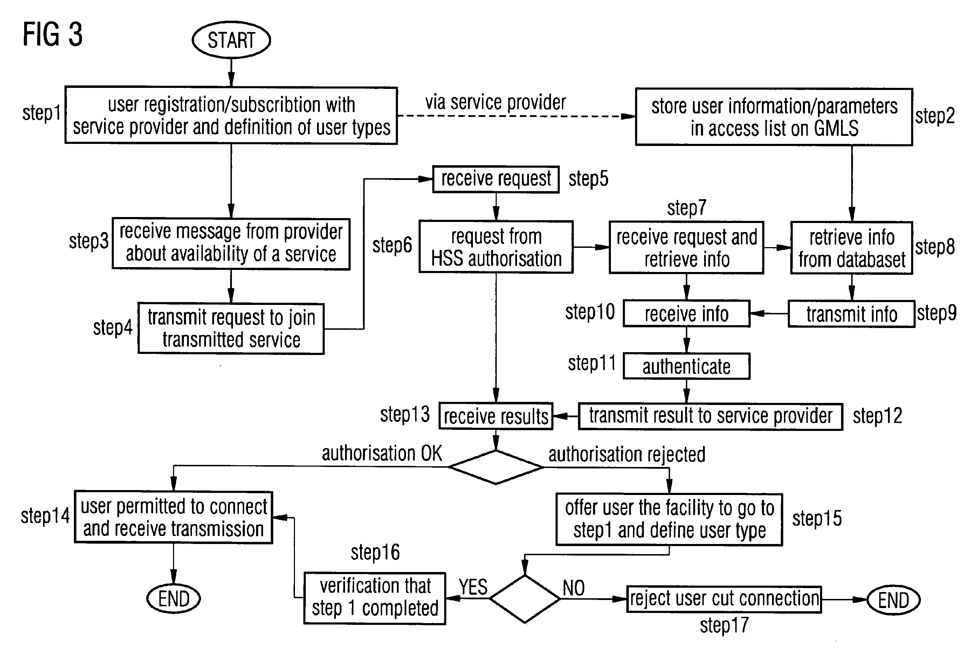

In fig. 3 the sequence of steps performed by the invention. In step 1, a user 10 registers/subscriber with a service provider by transmitting a registration/subscription request. Within the same request the user 10 also defines the user type with the different permissions associated to the particular user type. The registration/subscription information and any further information/parameters are sent via the service provider to be stored in the GMLS 430 in step 2. In step 3, user 10, receives a message transmitted from the service provider (not indicated in the flow chart) relating to the availability of a service being initiated at a specific time instance. In step 4, user 10 transmits a request to join and so receive the advertised service. The service provider, receives the request from user 10 in step 5 and requests, in step 6, the HSS 420 to verify that the authorisation of user 10 is valid or invalid. The HSS 420, in step 7, receives the request and communicates with the GMLS 430 to retrieve the necessary information, which is performed in step 8. The information once retrieved is transmitted, in step 9, to the HSS 420, which receives it and performs the authentication and transmits the results to the service provider which receives it, in steps 10, 11, 12 and 13 respectively. Upon reception of the authorisation results, the service provider permits user 10 to connect and receive the transmission when the authorisation validates the user 10 in step 14, or if the authorisation rejects user 10, will offer the possibility (step 15) to user 10 to revert to step 1 and execute it. If user 10 refuses to revert to step 1, then user 10 is rejected and the connection between user 10 and the service provider is cut (step 17). If the user reverts to step 1, then the service provider verifies that step 1 has been completed (step 16) and allows user 10 to receive the transmission (step 14).

Although the invention has been describer in terms of a preferred embodiment described herein, those skilled in the art will appreciate other embodiments and modifications which can be made based on the disclosure of the present invention, without departing from the scope of the invention which is determined by the scope of the patent claims appended hereto.

## Claims

1. Method for controlling an access of at least one user (10) to a transmission, transmitted by a transmission initiator (320) in a communications system (1000) comprising the steps of:
- defining a type of user permitted to receive said transmission by including in a user type entry, a field comprising information indicating that said at least one user (10) can only receive said transmission (step 1);
- authenticating, during a joining phase, that each one of said at least one user (10) joining said transmission is permitted to only receive said transmission (step 11);
- permitting, upon completion of said authentication, said at least one user (10) having been authenticated to receive said transmission (step 14).

2. Method according to claim 1, wherein said transmission is a broadcast transmission.

3. Method according to claim 1, wherein said transmission comprises of at least one service.

4. Method according to claim 3, wherein said service is a Push to Talk and/or a Push to View service.

5. Method according to claim 1, wherein said user type entry is stored as an access list containing a list of users (10) in a database (430, db).

6. Method according to claim 5, wherein said database (430, db) is a Group List Management Service database.

7. Method according to claim 1, wherein a further field is included in said user type entry comprising information indicating that said at least one user (10) permits a surcharge to be collected.

8. Method according to claim 7, wherein said further field is included in a Charging Data Record part of said user type entry.

9. Method according to any one of the previous claims 1 to 8, wherein said transmission initiator (320) transmits a message indicating that said transmission is to be initiated.

10. Method according to any one of the previous claims 1 to 9, wherein said transmission comprises one of the following: audio data, video data, image data.

11. Method according to any one of the previous claims 1 to 11, wherein said transmission is received by one of the following: a mobile phone (10), a computer (10, 20), a television set (20), a fixed line phone (20).

12. System having means arranged for controlling an access of at least one user (10) to a transmission, transmitted by a transmission initiator (320) having transmission means (321) arranged to transmit, in a communications system (1000) comprising:
- defining means (432) adapted to define a type of user permitted to receive said transmission by including in a user type entry a field comprising information indicating that said at least one users (10) can only receive said transmission;
- authenticating means (422) adapted, during a joining phase, to authenticate that each one of said at least one users (10) joining said transmission is permitted to receive said transmission;
- permitting means (312) adapted upon completion of said authentication, to permit said at least one users (10) having been authenticated to receive said transmission.

13. System according to claim 13, wherein said user type entry is stored by storing means 431, as an access list containing a list of users (10) in a database (430, db).

14. System according to claim 14, wherein said database (430, db) is a Group List Management Service database.

15. System according to claim 13 or 14, wherein a further field is included in said user type entry by said defining means (432) comprising information indicating that said at least one user 10 permits a surcharge to be collected.

16. System according to claim 16, wherein said defining means (432) are arranged to include said further field in a Charging Data Record part of said user type entry.

17. System according to any one of the previous claims 13 to 17, wherein said transmission means (321) are further arranged to transmit a message indicating that said transmission is to be initiated.

18. System according to any one of the previous claims 13 to 18, wherein one of the following: a mobile phone (10), a computer (10, 20), a television set (20), a fixed line phone (20) comprise receiving means (11) arranged to receive said transmission.
